# EUROPEAN PATENT APPLICATION

(11) **EP 2 223 967 A2**
(43) Date of publication of application: **01.09.2010**
(21) Application number: 10001557.7
(22) Date of filing: 16.02.2010
(51) Int. Cl.: C08L 75/04, C08G 18/76, C08G 18/32

(54) **High modulus transparent thermoplastic polyurethanes characterized by high heat and chemical resistance**

(30) Priority: 27.02.2009 US 394444
(71) Applicant: Bayer MaterialScience LLC, Pittsburgh, PA 15205 (US)
(72) Inventor: Lawrey, Bruce D., Coraopolis, PA 15108 (US); Vescio, Leslie J., Ambridge, PA 15003-1655 (US)
(74) Representative: Klimiuk, Meike

(57) **Abstract**

Transparent thermoplastic polyurethanes characterized by high impact resistance, high flexural modulus, high chemical resistance and a deflection temperature under load of at least 50°C at 264 psi are produced by blending a polyurethane reaction product with from 3 to 20 parts by weight, per 100 parts by weight of total blend, of a thermoplastic polyurethane. The polyurethane reaction product is prepared from a diphenylmethane diisocyanate and at least one chain extender at an NCO/OH ratio of from 0.95:1 to 1.10:1 in the absence of any isocyanate-reactive material having a molecular weight greater than 400.

## Description

### BACKGROUND OF THE INVENTION

The present invention relates to high modulus transparent thermoplastic polyurethanes characterized by a high degree of heat, chemical and impact resistance and to a process for the production of such thermoplastic polyurethanes.

Methods for producing thermoplastic polyurethanes are well known to those skilled in the art of polyurethanes. See, for example, U.S. Patent 3,642,964 which teaches a continuous process for the one-shot preparation of thermoplastic non-cellular polyurethanes.

The physical properties of thermoplastic polyurethanes vary considerably, depending upon the specific materials and processing parameters used to produce them or to blend with them.

U.S. Patents 4, 261,946 and 4,342,847 disclose a process for the preparation of thermoplastic materials in which a thermoplastic polymer is introduced into an extruder at a first inlet at a temperature such that the polymer melts. Polyurethane forming reactants are then added to the molten polymer through a second inlet. The resultant blend of the thermoplastic polymer and the polyurethane is discharged from the extruder in finished form. The product polymer blend is said to possess high impact resistance. That the formation of the polyurethane in the molten polymer is important for achieving the desired high impact resistance is shown in Comparative Example 2(d) of U.S. Patent 4,342,847 where it is demonstrated that high impact properties were not achieved when the polyurethane was formed before being added to the molten thermoplastic polymer.

U.S. Patent 4,376,834 discloses polyurethanes taught to have high impact resistance, high flexural modulus, and a heat distortion temperature of at least 50°C at 264 psi. These disclosed polyurethanes are the reaction products of a polyisocyanate, 2-25% by weight, based on total weight of polyurethane, of a polyol, and at least one chain extender. This patent also teaches that depending upon the particular combination of reactants, the polyurethanes described therein may be thermoplastic or thermoset and can be prepared in cellular or non-cellular form. Thermoplastic resins are taught to be obtained by using substantially difunctional polyisocyanates, difunctional extenders and a polyol having a functionality less than or equal to 4. Those polyurethanes having the advantageous impact resistance, flex modulus and minimum heat deflection properties produced in accordance with the invention described therein are opaque in appearance. This opaque appearance is attributed to the different refractive indices of the hard segment phase and soft segment phase. In contrast, polyurethanes which are not produced in accordance with the invention described therein are clear in appearance but do not have the desired high impact resistance, high flex modulus and minimum heat deflection temperature.

U.S. Patent 4,567,236 discloses polymer blends composed of a clear polyurethane plastic and a minor amount (i.e., up to 30 parts per 100 parts by weight of the blend) of an incompatible polymeric impact modifier. The incompatible polymeric impact modifiers which are taught to be preferred include: acrylonitrile-butadiene-styrene terpolymers, methyl methacrylate-butadiene-styrene terpolymers, chlorinated polyethylenes, ethylene-vinyl acetate copolymers, vinyl chloride-ethylenevinyl acetate graft polymers, polyethylene copolymers of vinyl chloride with octyl acrylate or octyl fumarate, and poly(alkyl acrylates). The polymer blends disclosed in U.S. 4,567,236 are taught to be opaque in direct contrast to the clear, transparent appearance of the polyurethane components from which the blends are prepared. This opaque appearance is attributed to the fact that the impact modifier is present as a separate phase dispersed in the polyurethane.

A transparent thermoplastic polyurethane which also has high impact resistance, high flexural modulus, high chemical resistance and a deflection temperature under load of at least 50°C at 264 psi has not been disclosed in the prior art.

### SUMMARY OF THE INVENTION

It is an object of the present invention to provide a transparent thermoplastic polyurethane which also has high impact resistance, high flexural modulus, high chemical resistance and a deflection temperature under load of at least 50°C at 264 psi.

It is also an object of the present invention to provide a process for the production of a transparent thermoplastic polyurethane which also has high impact resistance, high flexural modulus, high chemical resistance and a deflection temperature under load of at least 50°C at 264 psi which may be conducted in one step or multiple steps.

These and other objects which will be apparent to those skilled in the art are achieved by blending a polyurethane reaction product with from 3 to 20 parts by weight, per 100 parts by weight of total blend, of a thermoplastic polyurethane. The polyurethane reaction product is prepared from an organic polyisocyanate and at least one chain extender having a functionality of from 2 to 3 and a molecular weight of from about 50 to about 400 in the absence of any isocyanate-reactive composition having a molecular weight greater than 400 at an NCO/OH ratio of from 0.95:1 to 1.10:1. The thermoplastic polyurethane included in an amount of from 3 to 20 parts may be any thermoplastic polyurethane.

### DETAILED DESCRIPTION OF THE PRESENT INVENTION

The present invention is directed to a transparent thermoplastic polyurethane which is also characterized by high impact resistance, high flexural modulus, high chemical resistance and a deflection temperature under load of at least 50°C at 264 psi.

As used herein, "transparent" means that the thermoplastic polyurethane blend has a percent total luminous transmittance (as determined in accordance with ASTM D1003) which is greater than or equal to 85%, preferably greater than 87%.

As used herein, "high impact resistance" means that the thermoplastic polyurethane blend has an impact strength at ambient conditions of at least 1 ft lb per inch, preferably at least 3 ft lbs per inch of notch as measured by the notched Izod test (ASTM D 256).

The expression "deflection temperature under load" as used herein is the measure of the resistance of the polymer to deformation by heat and is the temperature at which deformation of a specimen of the polyurethane of predetermined size and shape occurs when subjected to a flexural load of a stated amount (e.g., 264 or 66 psi). All such temperatures reported herein were obtained using the procedure of ASTM D 648. The thermoplastic polyurethane blends of the present invention are characterized by deflection temperatures under a 264 psi load of greater than 50°C, preferably, greater than 60°C, most preferably, greater than 70°C.

The term "high flexural modulus" as used herein means a flexural modulus under ambient conditions of at least about 150,000 psi, preferably greater than 200,000 psi, most preferably greater than 250,000 psi as determined in accordance with ASTM D 790.

A key feature of the thermoplastic polyurethane blends of the present invention is that they may be produced with a polyurethane that is made without any added isocyanate-reactive product having a molecular weight greater than 400 (i.e., it can be produced without the use of high molecular weight polyols as a separate ingredient). The elimination of the addition of these isocyanate-reactive materials avoids the difficulty of accurately metering the small amounts of the high molecular weight isocyanate-reactive material which are generally used. It also eliminates the problems encountered due to immiscibility of the high molecular weight isocyanate-reactive material in the chain extender.

It has been found that despite the absence of a separate high molecular weight isocyanate-reactive ingredient such as a high molecular weight polyol, the thermoplastic polyurethane blends of the present invention are not brittle as would have been expected from the teachings in prior art such as U.S. Patent 4,567,236.

It is particularly surprising that the high modulus, impact and chemical resistant thermoplastic polyurethane blends of the present invention can be formed by feeding all of the components to a reactor or an extruder simultaneously without the need to pre-melt the thermoplastic polyurethane or a polyurethane reaction product.

The compositions of the present invention are polymer blends characterized by high impact resistance, high chemical resistance, high flexural modulus, and a deflection temperature under load of at least 50°C at 264 psi. These blends are composed of:
(1) a polyurethane which is the reaction product of
   (a) an organic polyisocyanate, and
   (b) at least one chain extender,
      in amounts such that the ratio of isocyanate groups in (a) to active hydrogen groups in (b) is in the range of from 0.95:1 to about 1.10:1 and
(2) from 3 to 20 parts by weight, per 100 parts by weight of the blend, of a thermoplastic polyurethane.
   The polyurethane reaction product (1) must not, however, be produced using
   any isocyanate-reactive material having a molecular weight greater than 400.

Any of the known organic isocyanates having at least two isocyanate groups, including the known modified isocyanates having at least two isocyanate groups may be used as component (a) in the production of polyurethane (1) in the practice of the present invention. Suitable isocyanates include aromatic, aliphatic, and cycloaliphatic polyisocyanates and combinations thereof. Useful isocyanates include: diisocyanates such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclohexane diisocyanate, hexahydrotoluene diisocyanate and its isomers, isophorone diisocyanate, dicyclohexylmethane diisocyanates, 1,5-naphthalene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-4,4'-biphenylene diisocyanate; triisocyanates such as 2,4,6-toluene triisocyanate; and polyisocyanates such as 4,4'-dimethyl-diphenylmethane-2,2',5,5'-tetraisocyanate and the polymethylene polyphenylpolyisocyanates.

Modified isocyanates are obtained by chemical reaction of diisocyanates and/or polyisocyanates. Modified isocyanates useful in the practice of the present invention include isocyanates containing ester groups, urea groups, biuret groups, allophanate groups, carbodiimide groups, isocyanurate groups, uretdione groups and/or urethane groups. Preferred examples of modified isocyanates include prepolymers containing NCO groups and having an NCO content of from about 25 to about 35% by weight, preferably from about 28 to about 32% by weight. Prepolymers based on polyether polyols or polyester polyols and diphenylmethane diisocyanate are particularly preferred. Processes for the production of these prepolymers are known in the art.

The most preferred polyisocyanates for the production of polyurethane (1) of the present invention are 4,4'-methylenebis(phenyl isocyanate), mixtures of 4,4'-methylenebis(phenyl isocyanate) and 2,4'-methylenebis(phenyl isocyanate), and liquid forms of 4,4'-methylene-bis(phenyl isocyanate). 4,4'- methylenebis-(phenyl isocyanate) is particularly preferred.

The chain extender (b) used to produce polyurethane (1) has a functionality from 2 to 3 and a molecular weight from about 50 to about 400. Any of the known chain extenders satisfying these criteria are suitable. Chain extenders may contain hydroxyl groups, amino groups, thiol groups, or a combination thereof.

Aliphatic straight and branched chain diols, including cycloaliphatic diols are preferred in the practice of the present invention. Aliphatic diols containing from 2 to 8 carbon atoms are particularly preferred. Examples of suitable chain extenders include: ethylene glycol, 1,3-propanediol, 1,4-butanediol, 1,5-pentanediol, 1,6-hexanediol, 1,2,-propanediol, 1,3-butanediol, 2,3-butanediol, 1,3-pentanediol, 1,2-hexanediol, 3-methylpentane-1,5-diol, 1,4-cyclohexanedimethanol, 1-methyl-1,3-propanediol, 2-methyl-1,3-propanediol, trimethylolpropane, 1,2,6-hexanetriol, pentaerythritol, 1,2,4-butanetriol, trimethylolethane, glycerol, diethylene glycol, dipropylene glycol, tripropylene glycol, neopentyl glycol, ethanolamine, N-methyldiethanol-amine, and N-ethyl-diethanolamine. The most preferred chain extenders are 1,4-butanediol, 1,6-hexanediol and 1,3-propanediol.

Aromatic polyols having a functionality of from 2 to 3 and a molecular weight up to 400 may also be used as chain extender (b). Suitable aromatic polyols include those derived from bisphenol A.

Suitable chain extenders (b) also include hydroxyl-containing polyethers having a molecular weight of from about 50 to about 400. Suitable hydroxyl-containing polyethers include polyoxyalkylene polyether polyols, such as polyoxyethylene diol, polyoxypropylene diol, polyoxy-butylene diol, and polytetramethylene diol having the requisite molecular weights and hydroquinone di(beta-hydroxyethyl) ether.

Suitable amine chain extenders include amino groups and preferably also contain alkyl substituents. Examples of such aromatic diamines include 1,4-diaminobenzene, 2,4- and/or 2,6-diaminotoluene, metaxylene diamine, 2,4'- and/or 4,4'-diaminodiphenylmethane, 3,3'-dimethyl-4,4'-diaminodiphenylmethane, 1-methyl-3,5-bis(methylthio)-2,4- and/or -2,6-diaminobenzene, 1,3,5-triethyl-2,4-diaminobenzene, 1,3,5-triisopropyl-2,4-diaminobenzene, 1-methyl-3,5-diethyl-2,4- and/or -2,6-diaminobenzene, 4,6-dimethyl-2-ethyl-1,3-diaminobenzene, 3,5,3',5'-tetraethyl-4,4-diaminodiphenylmethane, 3,5,3',5'-tetraisopropyl-4,4'-diaminodiphenylmethane, and 3,5-diethyl-3',5'-diisopropyl-4,4'-diaminodiphenylmethane. Although generally less preferred, certain (cyclo)aliphatic diamines are also suitable. A particularly suitable (cyclo)aliphatic diamine is 1,3-bis(aminomethyl)cyclohexane. Such diamines may, of course, also be used as mixtures.

The ratio of isocyanate groups in (a) to active hydrogen groups in (b) is in the range of from 0.95:1 to about 1.10:1, preferably, from 0.97 to 1.07, most preferably, from 0.99 to 1.05.

Any thermoplastic polyurethane may be used as component (2) in the blends of the present invention. Preferred thermoplastic polyurethanes include: aromatic thermoplastic polyurethanes (TPUs) based on polyester polyols (e.g., polybutylene adipates and polycaprolactone polyols) and aliphatic TPUs based on polyester polyols.

The thermoplastic polyurethane used as component (2) is generally included in the blend in an amount of from 3 to 20 parts by weight per 100 parts by weight of the total blend, preferably, from 3 to 15 parts by weight, most preferably, from 3 to 10 parts by weight.

Materials which may optionally be included in the blends of the present invention include and of the known anti-oxidants, stabilizers, catalysts, stabilizers against degradation from ultraviolet light, organic dyes, internal lubricants or mold release agents, and flame retardants.

If included, these optional materials are generally used in an amount such that the total amount of optional material does not exceed 10%, preferably is less than 3%.

The present invention is also directed to a process for the production of a transparent thermoplastic polyurethane which also has high impact resistance, high flexural modulus, high chemical resistance and a deflection temperature under load of at least 50°C at 264 psi which may be conducted in one step or in multiple steps. Any of the known processes and equipment for producing blends of a polymeric material with a thermoplastic material may be used to produce the blends of the present invention but a one-shot process is particularly preferred because of its simplicity and lower equipment and operational costs.

An example of a suitable one-shot process which may be used to produce the blends of the present invention is disclosed in U.S. Patent 3,642,964. In a preferred embodiment of the present invention, the polyurethane reaction product-forming components, i.e., MDI and chain extender and the thermoplastic polyurethane combined and subjected to high shear mixing under conditions such that a homogeneous blend is obtained. The blend is then passed to a shaping zone in which the blended is treated to obtain the desired particle size, e.g., by extrusion, granulation or comminution.

An example of a suitable multiple step process which may be used to produce the blends of the present invention is disclosed in U.S. Patents 4,261,946 and 4,342,847. More specifically, the TPU is introduced into an extruder at a first inlet and the extruder is maintained at such a temperature that the TPU melts. The polyurethane-forming components, i.e., MDI and chain extender are added to the molten TPU and the resultant mixture is then extruded. The extruded mixture is then cooled and pelletized.

In another embodiment of the present invention, the blend of polyurethane reaction product (1) and thermoplastic polyurethane (2) may be further processed by combining that blend with additional thermoplastic polyurethane to produce a second blend. This additional thermoplastic polyurethane used to produce the second blend may be the same thermoplastic polyurethane which was used as component (b) in producing the first thermoplastic blend or it may be a different thermoplastic polyurethane. In producing the second blend, in addition to the added thermoplastic polyurethane, it is also possible to add isocyanate-reactive materials (e.g., polyols having molecular weights greater than 400) and other processing aids and auxiliary agents. This second blend may, of course, be processed in accordance with any of the techniques known to those skilled in the art.

The process and blends of the present invention are particularly advantageous with respect to prior art processes and materials because the present invention employs lower cost raw materials to produce a material with better heat resistance which is particularly noticeable at, e.g., a temperature of 150°C because the compositions of the present invention are solid whereas the prior art composition bubbles and is destroyed at that temperature. The compositions of the present invention are also characterized by better chemical resistance (the prior art composition whitens immediately in MEK while the blends of the present invention remain unaffected), easier manufacturing process, dimensional stability at high temperatures, and quicker drying.

The literature for prior art resins states that if the seals on the bags have been broken, or if wet, the prior art resins are put into a dryer where the necessary drying time will be eight to 12 hours. The polymer blends of the present invention are able to be dried adequately in 4 to 6 hours.

Having thus described our invention, the following Examples are given as being illustrative thereof. All parts and percentages given in these Examples are parts by weight or percentages by weight, unless otherwise indicated.

### EXAMPLES

The following materials were used in the Examples:

TPU's suitable for blending with the polyurethane reaction product:
- TPU A:: An aliphatic TPU having a nominal Shore D Hardness of 60 which is produced from bis(4-isocyanatocyclohexyl) methane, a polyester polyol and 1,4-butanediol that is commercially available under the designation DP7-3018 from Bayer MaterialScience LLC.
- TPU B:: An aromatic TPU having a nominal Shore D Hardness of 50 which is produced from MDI, a polyester polyol and 1,4-butanediol that is commercially available under the name Texin 250 from Bayer MateriaiScience LLC.
- TPU C:: An aromatic TPU having a nominal Shore D Hardness of 45 which is produced from MDI, a polyester polyol and 1,4-butanediol that is commercially available under the name Texin 245 from Bayer MaterialScience LLC.
- TPU D:: An aromatic TPU having a nominal Shore D Hardness of 85 which is produced from MDI, an polyester polyol and 1,4-butanediol that is commercially available under the name Texin DP7-1182 from Bayer MaterialScience LLC.

Materials used to produce the Polyurethane Reaction Product:
- MDI:: 4,4'-diphenylmethane diisocyanate.
- BDO:: 1,4-butanediol.
- ANTI-OX:: The antioxidant tetrakis[methylene-3-(3,5-di-tert-butyl-4-hydroxyphenyl)-propionate] methane
- DYE A:: A substituted anthraquinone organic blue dye.
- DYE B:: A substituted anthraquinone organic violet dye.

### Examples 1 - 4

Blends were prepared in accordance with the present invention using a 53 mm ZSK twin screw extruder equipped with a Gala underwater pelletizer. Separate streams of MDI and BDO were pumped into the feed throat in the proportions shown in Table I. In addition, an auger feeder was used to deliver the specific TPU listed in each example with ANTI-OX and other additives as also listed in Table I below. The extruder was set at a temperature of 170°C and screw rotation rate of 292 so that an essentially complete reaction was able to take place during the time the reactants resided in the extruder.

**Table I**

| Example | 1 | | 2 | | 3 | | 4 | |
|---|---|---|---|---|---|---|---|---|
| | | | | | | | | |
| Formulation | (pbw) | (wt %) | (pbw) | (wt%) | (pbw) | (wt %) | (pbw) | (wt%) |
| BDO | 1365.00 | 24.63 | 1365.00 | 24.81 | 1365.00 | 24.70 | 1365.00 | 24.37 |
| | | | | | | | | |
| TPU B | 194.70 | 3.51 | | | | | | |
| TPU D | | | 152.49 | 2.77 | | | | |
| TPU C | | | | | 178.50 | 3.23 | | |
| TPU A | | | | | | | 251.87 | 4.50 |
| MDI | 3981.25 | 71.82 | 3981.25 | 72.37 | 3981.25 | 72.03 | 3981.25 | 71.09 |
| | | | | | | | | |
| ANTI-OX | 2.15 | 0.039 | 2.15 | 0.039 | 2.15 | 0.039 | 2.15 | 0.038 |
| | | | | | | | | |
| DYE A | 0.0038 | 0.00007 | 0.0038 | 0.00007 | 0.0038 | 0.0038 | 0.0038 | 0.00007 |
| DYE B | 0.0043 | 0.00008 | 0.0043 | 0.00008 | 0.0043 | 0.0043 | 0.0043 | 0.00008 |
| | | | | | | | | |
| Total | 5543.11 | 100.00 | 5500.90 | 100.00 | 5526.91 | 100.01 | 5600.27 | 100.00 |
| | | | | | | | | |
| | | | | | | | | |
| NCO:OH | 1.05 | | 1.05 | | 1.05 | | 1.04 | |
| | | | | | | | | |

The pellets produced in each of these runs were dried for 5 hours at 250°F (121.1°C) and injection molded. The molded parts were post-cured for 2 hours at 110°C. They were then tested according to the methods listed in Table II.

**Table II**

| Example | 1 | 2 | 3 | 4 |
|---|---|---|---|---|
| | | | | |
| Rockwell hardness, M Scale | 80:6 | 80.4 | 79.8 | 80.6 |
| Rockwell hardness, R Scale | 124.6 | 124 | 125 | 124.6 |
| | | | | |
| % Total Luminous Transmittance (D1003) | 85.57 | 86.97 | 86 | 87.93 |
| % Haze (D1003) | 12.73 | 6.67 | 11.3 | 3.90 |
| | | | | |
| DTUL¹ @ 66 psi (D 648), °C | 97.1 | 100.4 | 95.35 | 99.65 |
| DTUL¹ @ 264 psi (D 648), °C | 88.7 | 90.85 | 86.55 | 89.75 |
| | | | | |
| Vicat (10N, 50°C/hr) (D 1525), °C | 111.0 | 131.4 | 109.8 | 116.3 |
| | | | | |
| Notched Izod (0.125"), ft-lb/in. | 1.31 | 1.46 | 1.28 | 1.36 |
| | | | | |
| Flexural Stress at 5% Deflection, psi (D 790) | 15,127 | 15,258 | 15,229 | 15,098 |
| Maximum Flexural Stress, psi (D 790) | 17,013 | 17,202 | 17,114 | 17,114 |
| Strain at maximum stress, psi (D 790) | 7.467 | 7.533 | 7.5 | 7.6 |
| Flexural Modulus, psi (D 790), psi | 343,450 | 348,236 | 347, 511 | 333,297 |
| | | | | |
| Tensile Modulus, psi (D 638) | 331,200 | 334,500 | 338,800 | 329,700 |
| Ultimate Tensile Strength, psi (D 638) | 11,800 | 12,010 | 11,850 | 11,820 |
| Elongation at Yield, % (D 638) | 8.0 | 8.38 | 7.9 | 8.34 |
| Tensile Strength at Yield, psi (D 638) | 11,800 | 12,010 | 11,850 | 11,820 |
| Elongation at Break, % (D 638) | 55.18 | 32.96 | 82.9 | 78.2 |
| Tensile Strength at Break, psi (D 638) | 8,190 | 8,462 | 8,372 | 8,441 |

| | | | | |
|---|---|---|---|---|
| ¹DTUL = Deflection Temperature Under Load | | | | |

### Examples 5 - 8

Using the same procedure as that which is described in Examples 1-4, blends within the scope of the present invention were prepared with the materials listed in Table III in the amounts listed in Table III.

**Table III**

| Example | 5 | | 6 | | 7 | | 8 | |
|---|---|---|---|---|---|---|---|---|
| Materials | (pbw) | (wt%) | (pbw) | (wt %) | (pbw) | (wt %) | (pbw) | (wt%) |
| | | | | | | | | |
| BDO | 1365.00 | 24.30 | 1365.00 | 24.04 | 1365.00 | 23.78 | 1365.00 | 23.53 |
| | | | | | | | | |
| MDI | 3941.44 | 70.16 | 3941.44 | 69.42 | 3941.44 | 68.68 | 3941.44 | 67.94 |
| | | | | | | | | |
| TPU A | 308.96 | 5.50 | 369.05 | 6.50 | 430.43 | 7.50 | 493.15 | 8.50 |
| | | | | | | | | |
| ANTI-OX | 2.15 | 0.038 | 2.15 | 0.038 | 2.15 | 0.037 | 2.15 | 0.037 |
| | | | | | | | | |
| | | | | | | | | |
| | | | | | | | | |
| Total | 5617.55 | 100.00 | 5677.63 | 100.00 | 5739.01 | 100.00 | 5801.73. | 100.00 |
| | | | | | | | | |
| NCO:OH | 1.040 | | 1.040 | | 1.040 | | 1.040 | |

The properties of injection molded test pieces made from the materials thus produced after being postcured for 2 hours at 110°C are reported in Table IV.

**Table IV**

| Example | | 5 | 6 | 7 | 8 |
|---|---|---|---|---|---|
| | | | | | |
| Test Details | Units | | | | |
| ASTM D 1003 -- total luminous transmittance | % | 89.1 | 85.8 | 86.4 | 87.8 |
| ASTM D 790 --flexural modulus | psi | 343,100 | 336,500 | 331,900 | 327,800 |
| DTUL¹648(.455ST-1/8"WDT-120R02) ASTM D 648 Deflection Temperature of Plastics--temperature to deflect 0.25 mm with 66 psi Load | °C | 96.75 | 95.95 | 94.2 | 96.3 |
| ASTM D 648 Deflection Temperature of Plastics--temperature to deflect 0.25 mm with 264 psi Load | °C | 89.1 | 89.1 | 87.05 | 87.25 |
| ASTM D 256 NOTCHED IZOD IMPACT, 1/8" thick | ft-Ibf/in | 1.35 | 1.33 | 1.34 | 1.39 |
| VICAT SOFTENING, ASTM D 1525 (50N / 50°C/hr) | °C | 102.6 | 102 | 101.4 | 101.2 |

| | | | | | |
|---|---|---|---|---|---|
| ¹DTUL = Deflection Temperature Under Load | | | | | |

### Example 9

The procedure described in Examples 1-4 was repeated using 71.09 wt.% MDI, 24.37 wt.% BDO, 4.50 wt.% TPU A, and 0.038 wt% ANTI-OX.

TPU A contains approximately 40.69% polyol. The effective amount of polyol in the formulation of Example 9 above is therefore only 1.83%. Even accounting for the percent polyol in the added TPU modifier, the percentage of polyol present in the product is below 2%. However, contrary to the teachings of U.S. Patent 4,376,834, the resulting polymer had the following physical properties when injection molded UL bars were tested.

| Run | A | B² |
|---|---|---|
| Rockwell hardness, M Scale | 69.8 | 80.6 |
| Rockwell hardness, R Scale | 122 | 124.6 |
| | | |
| % Total Luminous Transmittance (D1003) | 87.27 | 87.93 |
| % Haze (D1003) | 5.89 | 3.903 |
| | | |
| DTUL¹ @ 66 psi (D 648), °C | 90.75 | 99.65 |
| DTUL¹ @ 264 psi (D 648), °C | 75.35 | 89.75 |
| | | |
| Vicat (10N, 50°C/hr) (D 1525), °C | 110.2 | 116.3 |
| | | |
| Notched Izod (0.125"), ft-Ib/in. | 1.376 | 1.358 |
| | | |
| Flexural Stress at 5% Deflection, psi (D 790) | 15,214 | 15,098 |
| Maximum Flexural Stress, psi (D 790) | 16,360 | 17,114 |
| Strain at maximum stress, psi (D 790) | 6.9 | 7.6 |
| Flexural Modulus, psi (D 790), psi | 350,412 | 333,297 |
| | | |
| Tensile Modulus, psi (D 638) | 350,300 | 329,700 |
| Ultimate Tensile Strength, psi (D 638) | 11,180 | 11,820 |
| Elongation at Yield, % (D 638) | 7.52 | 8.34 |
| Tensile Strength at Yield, psi (D 638) | 11,180 | 11,820 |
| Elongation at Break, % (D 638) | 157.5 | 78.2 |
| Tensile Strength at Break, psi (D 638) | 8,809 | 8,441 |

| | | |
|---|---|---|
| ¹DTUL = Deflection Temperature Under Load ²Post cured | | |

As can be seen, the material produced in Example 9 was characterized by a high flexural modulus and Rockwell hardness, comparable to other engineering thermoplastics such as polycarbonate. It also exhibited excellent heat resistance as indicated by the DTUL and Vicat values. The clarity was apparent from the high level of light transmission. Values of 88% are quoted on other engineering thermoplastics including polycarbonate. The Izod impact strength indicates the material has good impact strength compared to materials such as polystyrene, SAN, etc. By comparison, a brittle thermoplastic such as polystyrene or SAN might have a notched Izod impact strength of less than 0.4 ft-lb/in. It can also be seen that certain properties are actually increased beneficially by post-curing for 2 hours at 110°C.

### Example 10

The thermal stability of the blends of the present invention was demonstrated by heating a blend (5.5% TPU and MDI and 1,4-butanediol) made in accordance with the present invention for 35 minutes at 150°C. A sample of a commercially available, high modulus TPU (commercially available under the name Isoplast® 301 from Dow Chemical) was also exposed to a temperature of 150°C for 48 minutes. The Isoplast® 301 TPU lost its dimensional integrity and foamed so severely that it could not be tested. In contrast, the material made in accordance with the present invention had a Vicat softening temperature of 184.9°C after being post-cured for 35 minutes at 150°C.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polymer blend **characterized by** high impact resistance, high chemical resistance, high flexural modulus, transparency and a deflection temperature under load of at least 50°C at 264 psi comprising:
(a) a polyurethane comprising the product of reaction of
(i) at least one organic isocyanate having at least two isocyanate groups,
(ii) at least one chain extender having from 2 to 3 isocyanate-reactive groups and a molecular weight from about 50 to about 400;
formed in the absence of any isocyanate-reactive material having a molecular weight greater than 400 using components (i) and (ii) in amounts such that from 0.95 to 1.10 isocyanate groups are present for each isocyanate-reactive group,
and
(b) from 3 to 20 parts by weight, per 100 parts by weight of the polymer blend, of a thermoplastic polyurethane.

2. The polymer blend of Claim 1 in which the organic polyisocyanate (i) is selected from the group consisting of 4,4'-methylenebis(phenyl isocyanate), mixtures of 4,4'-methylenebis(phenyl isocyanate) and 2,4'-methylenebis(phenyl isocyanate), and liquid forms of 4,4'-methylenebis(phenyl isocyanate)

3. The polymer blend of Claim 1 in which (a)(i) is 4,4'-methylenebis(phenyl isocyanate).

4. The blend of Claim 1 in which (a)(ii) is an aliphatic diol containing from 2 to 8 carbon atoms.

5. The blend of Claim 1 in which (a)(ii) is 1,4-butanediol.

6. The blend of Claim 1 in which (b) is an aliphatic thermoplastic polyurethane produced from bis(4-isocyanatocyclohexyl) methane, a polyester polyol and 1,4-butanediol.

7. The blend of Claim 1 in which (b) is an aromatic thermoplastic polyurethane produced from diphenylmethane diisocyanate, a polyester polyol and 1,4-butanediol.

8. The blend of Claim 1 having a transparency greater than 87%.

9. The blend of Claim 1 having a deflection temperature under load of greater than 60°C at 264 psi.

10. A process for the production of a polymer blend **characterized by** high impact resistance, high chemical resistance, high flexural modulus, transparency and a deflection temperature under load of at least 50°C at 264 psi comprising:
a) mixing
(i) an organic isocyanate having at least two isocyanate groups,
(ii) a chain extender, and
(iii) a thermoplastic polyurethane,
b) subjecting the mixture from a) to high shear mixing under conditions sufficient to produce a homogeneous blend, and
c) extruding the homogeneous blend from b).

11. The process of Claim 10 in which the extruded material from step c) is cooled and treated to obtain the desired particle size.

12. The process of Claim 11 in which the desired particle size of the extruded material is achieved by pelletizing, granulating or comminuting.

13. A process for the production of a polymer blend **characterized by** high impact resistance, high chemical resistance, high flexural modulus, transparency and a deflection temperature under load of at least 50°C at 264 psi comprising:
a) treating a thermoplastic polyurethane under conditions sufficient to liquefy the thermoplastic polyurethane,
b) introducing
(i) an organic isocyanate having at least two isocyanate groups and
(ii) a chain extender
into the liquefied thermoplastic polyurethane under conditions such that a liquid mixture is formed,
c) subjecting the liquid mixture from b) to high shear mixing, and
d) extruding the liquid mixture from c).

14. The process of Claim 13 in which the extruded material from step d) is cooled and treated to obtain the desired particle size.

15. The process of Claim 14 in which the desired particle size of the extruded material is achieved by pelletizing, granulating or comminuting.

16. A process for the production of a thermoplastic polyurethane blend comprising:
(1) mixing
(a) the product of Claim 10,
(b) a thermoplastic polyurethane, and
(c) optionally, an isocyanate-reactive material
under conditions sufficient to form a liquid mixture,
(2) subjecting the liquid mixture from (1) to high shear mixing, and
(3) extruding the liquid mixture from (2).

17. The thermoplastic polyurethane blend produced by the process of Claim 16.

18. A process for the production of a thermoplastic polyurethane blend comprising:
(1) mixing
(a) the product of Claim 13,
(b) a thermoplastic polyurethane, and
(c) optionally, an isocyanate-reactive material
under conditions sufficient to form a liquid mixture,
(2) subjecting the liquid mixture from (1) to high shear mixing, and
(3) extruding the liquid mixture from (2).

19. The thermoplastic polyurethane blend produced by the process of Claim 18.
